# EUROPEAN PATENT APPLICATION

(11) **EP 4 417 062 A1**
(43) Date of publication of application: **21.08.2024**
(21) Application number: 23156492.3
(22) Date of filing: 14.02.2023
(51) Int. Cl.: A23L 3/365, C21D 1/18, C23C 2/02, A47J 36/24, F25D 31/00, B67D 1/08

(54) **AUTOMATIC PROCESSING METHOD USING AN AUTOMATIC PROCESSING APPARATUS**

(71) Applicant: Airbus Operations GmbH, 21129 Hamburg (DE)
(72) Inventor: Engelskirchen, Mathias Keanu, 21129 Hamburg (DE); Maslennikov, Johannes, 21129 Hamburg (DE)

(57) **Abstract**

A method (100) for automatically processing a subject material (200) and a corresponding automatic processing apparatus (10) for carrying out the method is provided. The method (100) comprises processing (101) a processing medium (19) within a processing medium reservoir (11) to predefined conditions, holding (102) the processing medium (19) within the processing medium reservoir (11) at the predefined conditions, arranging (103) the subject material (200) to be tempered relative to a processing container (12), such that the subject material (200) at least partially is located within the processing container (12), and starting (104) a tempering cycle. The method then comprises continuously transporting (105), via a pump (13), the processing medium (19), during a processing time, from the processing medium reservoir (11) into the processing container (12), wherein the processing medium (19) enters the processing container (12) via an inlet opening (16) and exits the processing container (12) by overflowing via an outlet opening (17), such that a fixed processing medium level (22) is present within the processing container (12) during the processing cycle, and removing (107) the processing medium (19) from the processing container (12) back into the processing medium reservoir (11) via the inlet opening (16) when the processing time is reached. The automatic processing process may, e.g., be a tempering process, or a galvanization process, or another process for treating a subject material (200) with a processing medium.

## Description

### TECHNICAL FIELD

The present disclosure relates to a processing method for automatically processing (such as, for example, tempering) a subject material.

### TECHNICAL BACKGROUND

Tempering of materials, such as freezing or thawing or cooking, takes place in many different industries, such as in medicine or manufacturing and engineering. Other processing of subject material with a processing medium, such as, e.g., galvanization, etc., is also important especially in engineering. For example, in medicine, blood plasma bags need to be frozen and thawed, while in engineering, for different manufacturing products such tempering processes are used (e.g., for sealants or other substances). In particular when two component sealants are concerned, fast freezing and thawing is important to increase the available processing/application time because after mixing of the single product components, the sealants can only be processed/applied during a certain time frame before they are no longer usable.

Currently, thawing of such subject materials usually take place in water baths or by microwave. However, thawing by microwave may cause significant temperature gradients/variations within the thawing product, which lead to varying thawing times at different locations within the subject material, which may be detrimental to the quality of the thawed product. Water bath thawing processes usually either take place by inserting the subject material in a single container filled with tempered water or by overflowing the subject material with tempered water from a reservoir which is pumped between the reservoir and a second thawing container in a circular manner. After the subject material is thawed, it needs to be removed from the water bath, either manually or by a corresponding lifting device. Further, when differently sizes subject materials, such as different sized syringes or cartridges, are placed into the water bath, the water level in the thawing container changes, thereby making exact relative placement of the subject material (or rather the container holding the subject material) to the water surface difficult. This is in particular problematic if the container containing the subject material is not hermetically closed on all sides (such as is the case with syringes) because on the non-hermetically closed side, water may flow into the container (such as the syringe) and mix with the subject material. Also, the temperature distribution within the water bath may not be homogeneous, leading to varying thawing times. Further, in order to avoid overheating while thawing (or undercooling while freezing), the water within the water bath is usually heated not above the target temperature of the subject material. This increases the thawing time and therefore reduces processing/application time.

### DESCRIPTION

It is an objective to provide a method for automatically processing, such as tempering, a subject material in a fast and uniform way without overheating or undercooling or otherwise damaging the subject material.

This objective is solved by the subject matter of the independent claims. Further embodiments are described in the dependent claims as well as in the following description. Although herein mainly described for tempering processes, the method and apparatus may also be used for other processing processes, such as galvanization processes, cooking processes, coating processes, electrochemical processes or other complex processes.

Herein, a method for automatically processing a subject material and an automatic processing apparatus are disclosed. The method preferably is performed using the automatic processing apparatus. Therefore, descriptions regarding the disclosed method are equally valid for the automatic processing apparatus and vice versa. In particular, any feature described with regard to the method may be embodied in the apparatus and vice versa.

According to a first aspect, a method for automatically processing a subject material is provided. The method comprises a processing medium within a processing medium reservoir to predefined conditions and holding the processing medium within the processing medium reservoir at the predefined conditions. The method further comprises arranging the subject material to be processed relative to a processing container, such that the subject material at least partially is located within the processing container, and starting a processing cycle. The method comprises continuously transporting, via a transporting device, the processing medium, during a processing time, from the processing medium reservoir into the processing container. The processing medium enters the processing container via an inlet opening and exits the processing container by overflowing via an outlet opening, such that a fixed processing medium level is present within the processing container during the processing cycle. Finally, the method comprises removing the processing medium from the processing container back into the processing medium reservoir via the inlet opening when the processing time is reached.

In the following, the method for automatically processing mainly is described with regard to a tempering process. However, the method may be used for any suitable process, such as galvanization or other electrochemical processes, coating processes, chemical alteration processes (such as cooking) or other complex thermic processes.

The processing medium reservoir and the processing container are two distinct containers, wherein the processing medium reservoir is a storage container for a fluid processing medium, such as a liquid or a gas, that is used as a transmitting medium of thermal energy (or particles, etc). In tempering applications, the processing medium is tempered (for example heated or cooled) to a desired temperature within the processing medium reservoir. For other processes, the processing medium may for example be controlled to exhibit other desired conditions, such as particle densities, etc. Once the processing medium within the processing medium reservoir has reached the desired temperature (or other condition), it is constantly being hold at this temperature (or condition). The processing medium reservoir may optionally be thermically isolated to facilitate holding the processing medium at a constant temperature. Further optionally, the processing medium reservoir may contain a processing medium filter or filter system for removing any impurities from the processing medium. The processing medium reservoir may further contain a lid closing the top of the processing medium reservoir. Preferably the lid is bearing the processing container.

Although described as having one processing container, it should be appreciated that the automatic processing apparatus may comprise more than one (any number) of processing containers which may be independently used for processing different subject materials using the described method. Further, multiple processing medium reservoirs may be present that may contain the same processing medium or different processing media, to enable multi-step processing of the subject material with different processing media. For example, the subject material may first be processed with a processing medium from a first processing medium reservoir and may afterwards be processed with another processing medium from another processing medium reservoir. For example, the subject material within a processing container may first be tempered to a desired temperature and afterwards be coated in a second processing cycle, etc.

The processing container is the container within which the actual process takes place. For this, a subject material to be processed (such as tempered) is first placed within the processing container. The subject material may, for example, be placed within a holding device, which may, for example, be a tray or other device having distinct openings (or insert openings) corresponding to the shape of the subject material (or rather to the shape of a container or vessel containing the subject material, such as, e.g., a syringe or a cartridge). Such a holding device may be placed at a top side of the processing container, such that it allows to insert a subject material vessel within the processing container in a defined geometrical relation to the processing container.

For example, such holding device may allow to arrange fully hermetically closed vessels or partly non-hermetically closed vessels correspondingly within the processing container.

For example, a closed cartridge containing the subject material may be fully hermetically closed or sealed, meaning that all sides of the cartridge are non-permeable for a fluid, such as the processing medium. When processing such containers or vessels of the subject material, the containers or vessels may be placed in the processing container such that they are fully covered by or submerged in the processing medium once the processing medium is within the processing container.

Partly non-hermetically closed or sealed vessels may for example be syringes or similar object containing the subject material. Such vessels, in order to make sure that the processing medium does not get mixed with the subject material, have to be placed relatively to the processing container in such a way, that non-hermetically closed portions are always above the level of the processing medium within the processing container, as described further below. For this, a corresponding holding device, such as a tray, may, for example, comprise openings into which the syringe (or other container) may be placed such that a corresponding shoulder of the syringe and therefore the non-hermetically sealed opening is supported above the level of the processing medium during the processing cycle.

Once the processing medium is at the desired temperature (or other condition) and the subject material has been arranged relative to the processing container, a processing cycle may be started, for example, manually by a user via a corresponding user interface, such as a push button or automatically by a controller. Once the processing cycle is started, the tempered processing medium is transported (such as pumped) from the processing medium reservoir into the processing container. For this, the inlet opening preferably is arranged at a bottom side of the processing container and fluidly connects the processing medium reservoir via the transporting device with the tempering container. The transporting device may, e.g., be a pump. However, the transporting device may, for example, also be one or more switchable valve. In such cases, the processing medium may, e.g., be hold ad overpressure within the processing medium reservoir. When the switchable valve is opened, the processing medium is transported from the processing medium reservoir into the processing container by means of the pressure difference. Other physical transportation effects may be conceivable, too. In the following, the method is described using a pump. When the pump is started in a filling pumping direction, the processing medium is pumped from the processing medium reservoir into the processing container.

The processing container, on the other hand, has an outlet opening ensuring that a fixed filling level of the processing medium within the processing container is not exceeded. In other words, the processing medium is pumped from the processing medium reservoir into the processing container, containing the subject material to be processed (such as tempered), and overflows this processing container at the defined filling level, such that at any point in time, the processing medium is hindered in exceeding the maximum filling level by overflowing back into the processing medium reservoir. For this, it is ensured that the maximum volume flow of the outlet opening exceeds the volume flow through the inlet opening. The circulation of the processing medium between the processing medium reservoir and the processing container ensures quicker heat transfer compared to standard water baths utilizing only one container because the processing medium flowing back into the processing medium reservoir immediately mixes with the processing medium remaining in the processing medium reservoir. Further, preferably the volume of the processing medium reservoirs is considerably larger than the volume of the processing container, such that the temperature (or other condition, such as particle concentration) of the processing medium in the processing medium reservoir does not significantly change because of the overflowing processing medium, thereby facilitating holding the processing medium at constant conditions (such as temperature). For tempering and holding the processing medium in the processing medium reservoir at a desired temperature, the processing medium reservoir may include a temperature regulation in the form of a temperature sensor and a heating and/or cooling device.

The outlet opening of the processing container may, for example, be an overflow opening at a top side of the processing container, for example a circumferential opening (such as a slit or edge) or single holes that are connected with an overflow channel that leads the overflowing processing medium back into the processing medium reservoir. In other words (apart from possibly evaporating processing medium), the overall filling level within the processing medium reservoir and the processing medium container is constant.

By continuously pumping or otherwise transporting (via the transporting device, such as a pump, valve, etc.) the processing medium from the processing medium reservoir into the processing container, heat is continuously transferred from the processing medium reservoir to the processing container and therefore to the subject material (in heating/thawing processes) or from the processing container, and therefore from the subject material, to the processing medium reservoir (in cooling/freezing processes) (In other processes, such as galvanization, particles are continuously transferred.) By keeping/holding the temperature of the processing medium in the processing medium reservoir constantly at the desired temperature and continuously pumping the tempered processing medium through the processing container, the subject material is evenly tempered or otherwise processed over time. Further, because the filling level within the processing container is defined by the outlet opening (overflow) differently sized subject materials can be placed within the processing container while still keeping the level of processing medium within the processing container at the desired level. This facilitates precise relative positioning of the subject material with regard to the processing container, thereby avoiding that processing medium mixes with the subject material (for example for subject materials in at least partly non-hermetically seals vessels or containers), and also enabling repeatable process times.

Once the subject material has reached the intended temperature or other condition (when the processing time has exceeded), contact between the subject material and the processing medium is stopped by immediately removing all of the processing medium from the processing container through the inlet opening. This may be achieved by stopping the pump and letting the processing medium drain from the processing container back into the processing medium reservoir, for example by gravity. Optionally, the processing container may contain a separate drain opening distinct from the inlet opening and the processing medium may be drained from the processing container via this drain opening. Alternatively or additionally, the pump may also be operated in the opposite direction, such that the processing medium is pumped back into the processing medium reservoir. Preferably, the processing container is arranged above the processing medium reservoir or at least at a higher position with regard to the gravitational vector. This accelerates emptying of the processing container because of the gravitational potential.

The desired temperature (or other condition) of the processing medium may, for example, be determined by the heat capacity and/or other physical properties (such as heat transfer capabilities of the vessel containing the subject material) of the subject material to be processed/tempered and the desired processing time for the corresponding subject material.

In particular, when the subject material is a two component material (or in general multi component material), such as a two component sealant, and the processing is a tempering process, fast tempering (such as freezing or thawing) is important because such two component materials can only be applied within a certain time frame (which is interrupted when in a frozen condition) after mixing the single components. Therefore, fast freezing and thawing is important in order to maximize application or processing time.

The processing time may either be set manually by a user or may, alternatively, be automatically retrieved, for example, from a database based on the type and/or amount of the subject material and/or may be defined by a measured core temperature of the subject material, as described further below.

The disclosed method enables fast freezing and thawing or otherwise processing of subject materials because the subject material can be separated from the processing medium very fast and almost immediately once the intended temperature (or other condition) is reached. Therefore, in tempering processes, the processing medium may have a temperature above (in thawing processes) or below (in freezing processes) the corresponding intended temperature without risking overheating (in thawing processes) or undercooling (in freezing processes), respectively, and therefore without damaging the subject material. In the state of the art, the subject material needs to be separated from the processing medium (such as water as tempering medium) either manually by taking out the subject material from a water bath or automatically, e.g., by means of a lifting mechanism. However, even such a lifting mechanism is much slower than the disclosed method.

The processing medium may, for example, be water or another liquid having a suitable heat capacity and other suitable physical properties. However, in certain embodiments, the processing medium may also be a gas or another suitable fluid, such as a supercritical fluid. All of these possibilities are collectively referred to herein as "fluid".

Some of the advantages of the disclosed method comprise the possibility for reconditioning of the processing medium to the desired conditions due to the processing medium reservoir. In particular, the volume ratios and the circulation allow for easy and accurate regulation of the conditions of the processing medium. Further, the processing container volume, the volume flow, the processing medium reservoir and possibly control circuit delays make the system size-able, based on the tolerated deviations of the manipulated variable / condition. Such manipulated variables / conditions of the processing medium may, for example, be the temperature of the processing medium (in tempering processes). Furthermore, manipulated variables / conditions within the processing medium reservoir could also include the concentration of certain elements within the processing medium (e.g., in a Galvanic treatment), or the concentration of suspended solids for cleaning / flushing operation / volatile organic compounds (VOCs) for immersion coating processes.

According to an embodiment, the method further comprises imparting, via a medium distributor, a circulation movement onto the processing medium when the processing medium enters the processing container, thereby providing a constant and homogeneous temperature distribution (or other condition distribution) within the processing container.

A medium distributor may, for example, be a correspondingly formed end portion of the inlet opening within the processing container. Such an end portion may, e.g., comprise correspondingly formed shovels or blades or another structure suitable to impart the circulation movement (e.g., a vortex or whirling movement) onto the processing medium.

By imparting a circulation movement, the processing medium within the processing container is continuously mixed, leading to an even temperature distribution (or other condition distribution) of the processing medium within the processing container and therefore improves even processing (such as tempering) of the subject material.

To further increase temperature homogeneity within the processing container, the medium distributor may optionally cover most of a bottom surface within the processing container, such that the circulation movement is imparted onto the full water cylinder (or generally processing medium cylinder) within the processing container.

According to another embodiment, starting of the processing cycle occurs manually by a user via a corresponding input into a human-machine interface of a controller that is in communication with the transporting device (e.g., pump, switchable valve, etc).

The controller may be any suitable device for controlling operation of the automatic processing apparatus used for implementing the described method and may, for example, be a general-purpose computer having a CPU and corresponding memory components, a FPGA, an ASIC, or any other suitable computation device. The human-machine interface may, for example, be a push button, a GUI on a computer screen, or any other suitable user interface. The user may, e.g., enter the desired temperature (or other condition, such as particle density, particle type, etc.) of the processing medium and/or and the processing time into the human-machine interface and may start a processing cycle after the subject material has been arranged relative to the processing container. However, the temperature (or other condition) and the processing time may also be fixed, and the user may only start a processing cycle by pushing a button or the like. Another possibility is that the controller has corresponding settings for different subject materials and their corresponding amounts/sizes stored in a database and the user selects the corresponding subject material and amount/size of the subject material. Further, a corresponding container/vessel of the subject material may optionally, e.g., comprise a QR code, barcode or other identifier (such as an RFID tag) that can be detected by the controller. The controller may accordingly set the temperature (or other condition) and time settings, so that the user only has to start the processing cycle. Further, the controller may optionally automatically start the processing cycle as soon as the subject material has been detected.

Further, the human-machine interface may (in any of the above options) provide the possibility to enter a desired temperature (or other condition) of the subject material. The controller may correspondingly select suitable setting, e.g., based on a computer model or database or based on other suitable means.

According to another embodiment, starting of the processing cycle occurs automatically by a controller that is in communication with the transporting device.

The controller may, for example, detect when the automatic processing apparatus used for carrying out the method is loaded with a subject material and may start the processing cycle automatically. The controller may optionally also notify a user when the processing cycle is finished.

According to another embodiment, the processing medium overflowing via the outlet opening is directed back to the processing medium reservoir via an overflow channel.

According to another embodiment, the processing medium is selected from the group consisting of: water, a silicone oil, a paint solution, a galvanic fluid, and ethanol.

However, it should be noted, that the processing media listed above are only exemplary in nature. The processing medium is not exclusively limited to such types of media.

According to another embodiment, the method further comprises continuously monitoring, via a level sensor, a level of the processing medium within the processing medium reservoir, thereby ensuring that at any time enough of the processing medium is present within the processing medium reservoir.

Over time, part of the processing medium within the processing medium reservoir may evaporate or otherwise vanish from the processing medium reservoir. The level sensor may therefore continuously monitor the filling level within the processing medium reservoir and may provide a warning when the processing medium may need to be refilled.

According to another embodiment, the processing time is set by a user via a human-machine interface or retrieved from a database based on a type of the subject material to be processed (e.g., tempered).

The user may directly set the processing time or may enter a type, and optionally amount, of the subject material. Further, the type of the subject material may be detected automatically, e.g., using QR codes or barcodes. The processing time may then be retrieved or selected from a database based on the user inputs. Additionally, the user may input an intended temperature (or other condition) of the subject material.

According to another embodiment, the type of the subject material is entered by a user.

According to another embodiment, the processing time is a variable time that is defined by monitoring a temperature (or other condition) of the subject material, wherein the processing time ends when the temperature (or other condition) reaches a target temperature (or other target condition).

A desired temperature, such as a core temperature or surface temperature, etc. (in tempering processes) may, for example, be given by the type of subject material, retrieved from a database, or entered by a user. The actual temperature (or other condition) of the subject material may be constantly monitored during a processing cycle and compared to the desired temperature (or other condition). Once the desired temperature or condition is reached, the processing time is deemed to be exceeded and the processing medium removed from the processing container.

According to another embodiment, removing of the processing medium is performed by reversing a transport direction of the transporting device and/or by utilizing a siphon effect.

By reversing the transport direction of the transporting device (e.g., pump direction of a pump), emptying of the processing container is even more accelerated. Alternatively or additionally, removing of the processing medium takes place by utilizing a siphon effect through the inlet opening when the transporting device is deactivated or its direction reversed.

According to another embodiment, arranging the subject material relative to the processing container comprises arranging the subject material in a holding device, arranged at the top of the processing container, having insert openings corresponding to the shape of the subject material.

The configuration of such a holding device has already been described further above. Further, the holding device may be modular and removable, such that different holding devices may be inserted based on the type of the vessel/container of the subject material.

According to another embodiment, the processing of the subject material is a tempering process.

According to another embodiment, the tempering process is a thawing process or a freezing process for two component materials.

For such materials, fast freezing and thawing processes are particularly important to increase the application time.

According to a second aspect, an automatic processing apparatus is provided. The automatic processing apparatus comprises a processing medium reservoir and a processing container having an inlet opening at the bottom and an outlet opening at the top. The outlet opening is fluidly connected with the processing medium reservoir via an overflow channel. The automatic processing apparatus further comprises a holding device at a top side of the processing container, a transporting device (such as a pump or a switchable valve, as described further above) fluidly connected between the inlet opening and the processing medium reservoir, wherein the transporting device is configured for transporting a processing medium between the processing medium reservoir and the processing container, and a heating device within the processing medium reservoir. A controller is in communication with the transporting device and the heating device. The controller is configured to control the automatic processing apparatus to execute the steps of the method according to any one of the embodiments described above.

The automatic processing apparatus itself has already been described above with regard to the method. The description with regard to the method is equally valid for the automatic processing apparatus. In particular, any features of the apparatus described above with regard to the method may be implemented by the automatic processing apparatus.

According to an embodiment, the automatic processing apparatus further comprises an insulated lid on top of the processing medium reservoir. The processing container is placed above the processing medium reservoir, thereby providing a height potential between the processing medium reservoir and the processing container for faster removing of the processing medium from the processing container when the processing cycle is finished.

In summary, the present disclosure provides a fast method and apparatus for automatically processing (in particular tempering, however, other processes, as described herein, are conceivable, too) a subject material in a uniform way with integrated overheating or undercooling protection or generally damage protection of the subject material. The method and apparatus can, for example, be used in medicine (e.g., for tempering of blood plasma bags), in engineering (in particular for freezing and thawing of two component materials), or other suitable industries. The method and apparatus may, e.g., also be used for cooking pasta to the point, for galvanization processes, for painting processes, electrochemical processes, or other complex thermic processes. The disclosed method and apparatus ensure a constant processing medium level within a processing container by using a separate processing medium reservoir and processing medium container and utilizing a closed loop for the processing medium via an overflow within the processing medium container. After a processing cycle is finished, the method ensures very fast separation of the subject material from the processing medium by removing the processing medium from the processing container, thereby effectively avoiding overheating or undercooling or otherwise damaging of the subject material. By using different containers, the processing medium may be held at a constant temperature, which may (because of the fast separation after the processing cycle) even be higher (thawing or heating processes) or lower (freezing or cooling processes) than the target temperature of the subject material without the risk of overheating or undercooling. This is in particular advantageous for two component materials such as two component sealants for increasing the application/process times for such components. Further, the need for complicated lifting units is avoided. The apparatus may be used for differently sized subject materials because the overflow ensures a constant processing medium level independent from the size (volume) of the subject material. The constant processing medium level together with corresponding holding devices further facilitate exact positioning of the subject material with regard to the processing container (i.e., with regard to the filling level of the processing container). Further, the inserted volume of the subject material does not impact the processing medium level within the processing container, therefore enabling processing of partly sealed containers with high filling level without the risk of contamination of the content. The disclosure also enables the pumping of a processing medium from a processing medium reservoir with a variable processing medium level, so that refilling can be done less frequently.

Although described herein mainly for tempering processes of, e.g., two component sealants, it should be appreciated that the disclosed method and apparatus may also be used in other fields, such as in cooking applications (e.g., for pasta), in disinfection baths for surgical equipment, for heat treatment (e.g., of steel or aluminum), for surface treatment (e.g., for paints, galvanization, electrolysis), for cycle testing with liquids, or for cleaning processes or other suitable applications.

### BRIEF DESCRIPTION OF THE DRAWINGS

In the following, exemplary embodiments are described in more detail having regard to the attached figures. The illustrations are schematic and not to scale. Identical reference signs refer to identical or similar elements. The figures show:
- **Fig. 1**: A schematic view of an automatic processing apparatus.
- **Fig. 2**: A schematic view of different holding devices for the automatic processing apparatus of Fig. 1.
- **Fig. 3**: A flow diagram of a method for automatically processing a subject material.

### DETAILLED DESCRIPTION

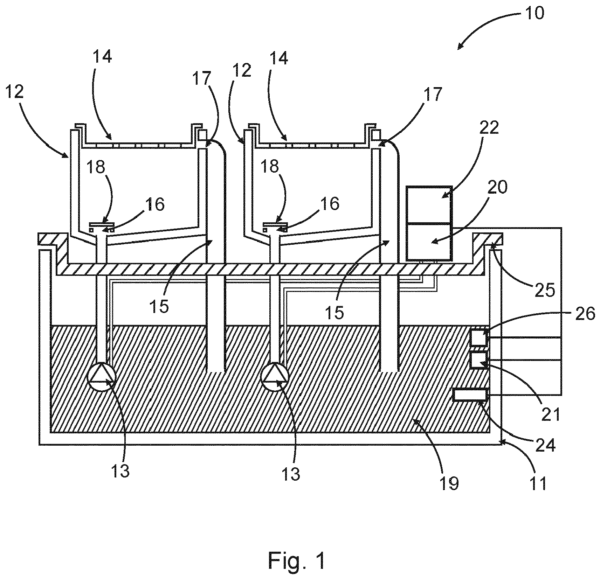

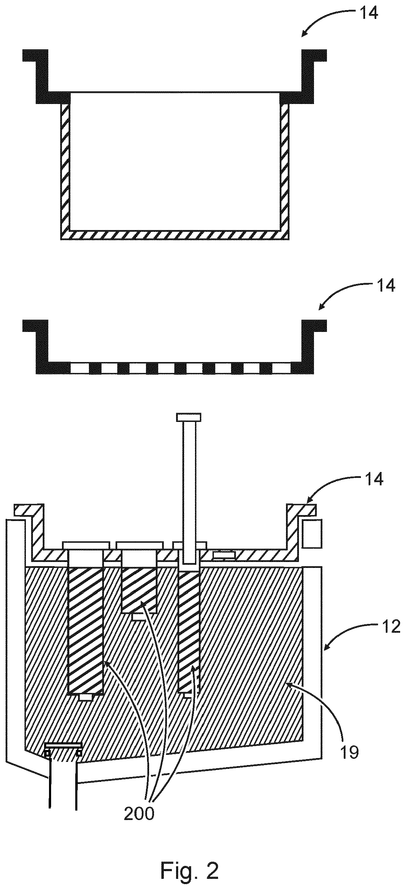

Fig. 1 shows a schematic view of an automatic processing apparatus 10. The automatic processing apparatus 10 comprises a processing medium reservoir 11 filled with a processing medium 19 and two processing containers 12. However, it should be appreciated that the automatic processing apparatus 10 may have any number of processing containers 12 any number of processing medium reservoirs 11. Each of the processing containers 12 comprises an inlet opening 16 that is fluidly connected to a pump 13 within the processing medium reservoir 11. Further, each of the processing containers 12 comprises a medium distributor 18. The processing medium reservoir 11 is closed by an insulated lid 25. Each of the processing containers 12 further comprises an outlet opening 17 which acts as an overflow opening 17. The terms "outlet opening" and "overflow opening" are used interchangeably herein. Each of the outlet openings 17 is connected to a corresponding overflow channel 15 fluidly connected to the processing medium reservoir 11 to direct processing medium 19 overflowing via the outlet opening 17 back to the processing medium reservoir 11. A respective holding device 14 is arranged on top of each processing container 12 for supporting multiple vessels/containers of subject materials 200 relative to the processing container 12, such that the subject material 200 at least partial protrudes downwards into the processing container 12 (see. Fig. 2, bottom part).

The processing medium reservoir 11 holds the processing medium 19, such as a fluid, e.g., a liquid such as water, and preferably is thermically isolated. The transporting devices 13 (pumps 13 in the depicted embodiment), a heating device 24 (and/or a cooling device 24 and/or a combined heating/cooling device 24), and a level sensor 21 within the processing medium reservoir 11 are connected to a controller 20 having a human-machine interface 22 for controlling operation of the automatic processing apparatus 10.

When each of the pumps 13 is activated, the processing medium 19 is pumped from the processing medium reservoir 11 into the corresponding processing container 12 via the corresponding inlet opening 16. The medium distributors 18 impart a circulation movement onto the processing medium 19 when it enters the corresponding processing container 12. This circulation movement provides an even temperature distribution within the processing containers 12. The inlet openings 16 within each of the processing containers 12 are placed at the lowest part of the processing containers 12. The outlet/overflow openings 17 are placed at a side of the top of each processing container 12. Although shown as only one outlet/overflow opening 17 per processing container 12, it should be appreciated that multiple such outlet/overflow openings 17 may be present in any processing container 12. Similarly, multiple inlet opening 16 may be present within each processing container 12. By arranging the inlet opening 16 and the outlet opening 17 in this way, an even more uniform temperature distribution within the processing container 12 is achieved because the processing medium 19 flows through all of the processing container 12 from the bottom to the top.

During a processing cycle, the pumps 13 stay activated until a processing time necessary for bringing the subject material 200 to a target temperature (or other target condition) is elapsed. The maximum volume flow through the outlet openings 17 is higher than the volume flow through the inlet openings 16, such that the processing medium 19 overflows via the outlet openings 17 once the processing medium level within the processing container 12 reaches the height of the corresponding outlet opening 17 and the processing medium level is preserved during most of the processing cycle (apart from the filling time and the emptying time, which are part of the processing cycle). The bottom of Fig. 2 shows the state when the processing container 12 is fully filled. The processing medium 19 overflowing via the outlet opening 17 is directed back to the processing medium reservoir 11 through an overflow channel 15.

Preferably, the overall volume of the processing medium reservoir 11 is considerably bigger than the combined volume of the processing containers 12, to facilitate holding the processing medium within the processing medium reservoir 11 at a constant temperature or other condition, such as particle density in coating or galvanization or other processes. The heating device 24 (and/or the cooling device 24 and/or the combined heating/cooling device 24) are controlled by the controller 20 in response to the output of a temperature sensor 26, such that the temperature of the processing medium 19 is held at a desired temperature within the processing medium reservoir 11.

The human-machine interface 22 may be used to input control parameters into the controller 20, such as a target temperature of the subject material 200, a type of the subject material 200, etc. as described further above.

The holding device 14 can hold different vessels/containers of subject materials 200 to be tempered. Fig. 2 shows some possible embodiments of such a holding device 14. At the top of Fig. 2, a grid holding device 14 is shown that may, for example, be used to arrange solid subject materials 200 within the processing container 12 of Fig. 1. In the middle of Fig. 2, a syringe/cartridge holding device 14 is shown that can be used to insert cartridges and/or syringes in corresponding openings. The cartridges/syringes (subject material 200) are placed inside the openings such that a collar section of the cartridges/syringes is supported on the upper side of the holding device while the remainder of the cartridges/syringes protrude downward into the processing container 12. The holding devices allow for precise relative placement of the subject material 200 (or rather of the vessel/container of the subject material 200) within the processing container 12, such that the subject material 200 is placed within/below the filling level of the processing container 12 during a processing cycle but the non-hermetically sealed portion remains above the filling level, thereby avoiding contamination of the subject material 200 with the processing medium 19.

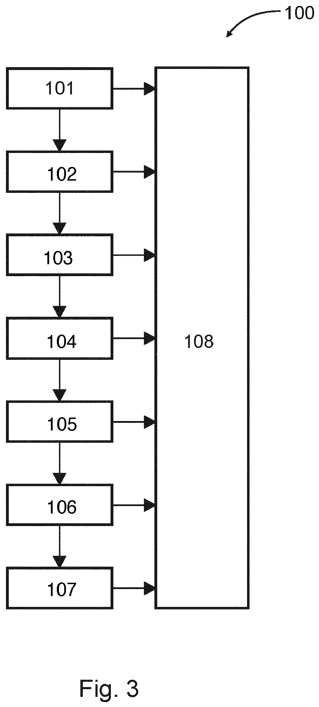

Fig. 3 shows a flow diagram of a method 100 for automatically processing a subject material 200 using the automatic processing apparatus of Fig. 1. In the following, the method is mainly described with regard to a tempering process. However, it should be appreciated that the method 100 may also be used for other processing types, such as chemically altering (e.g., cooking) a subject material or electrochemical applications (such as galvanizing) of a subject material, or other conceivable processes, some of which have been briefly described herein. Further, the method may be used for other complex thermal processes, such as metallurgical processes (e.g., solution annealing of rivets, downstream freezing to prevent subsequent microstructural changes, etc.).

The method 200 starts in step 101 with bringing the processing medium 19 within the processing medium reservoir 11 to a predefined temperature. The predefined temperature may be set by the controller 20 by a control loop via the temperature sensor 26 and the heating/cooling device 24. The predefined temperature may be entered by a user or may be set according to a type of subject material 200 to be tempered (e.g., retrieved from a database based on the type of subject material 200), as described further above.

In step 102, once the processing medium 19 has reached the predefined temperature, the processing medium 19 is constantly held at this temperature.

In step 102, a subject material 200 is arranged relative to the processing container 12, such that the processing container at least partially is located within the processing container 12. In particular, the subject material 200 is placed within the processing container 12 such that it protrudes into the processing container 12, so that the subject material 200 is fully covered by the processing medium 19 when the processing container 12 is filled with the processing medium 19, as described with regard to Fig. 1 and shown in the bottom part of Fig. 2. For this, the subject material 200 (or rather the vessel/container containing the subject material 200 may be placed in the holding device 14, such as into a corresponding opening of a tray.

In step 104, a processing cycle (tempering cycle) is started. This may, for example, take place manually by a user (e.g., via a push button or other input element of the human-machine interface) or automatically, as described herein further above.

Once the processing cycle is started, in step 105 the processing medium 19 is continuously pumped from the processing medium reservoir 11 into the corresponding processing container 12 by activating the pump 13. The processing medium 19 then starts to flow into the processing container 12 via the inlet opening 16. When the processing medium 19 within the processing container 12 reaches the height of the outlet opening 17, the processing medium overflows via the outlet opening 17 as is directed back to the processing medium reservoir 11. Therefore, a fixed processing medium level is held within the processing container 12 while simultaneously constantly exchanging the processing medium within the processing container 12. The pump 13 stays activated until a processing time has exceeded. The processing time may be set manually by a user or automatically by the controller. For example, the user may also enter a type of subject material 200 and a target temperature into the human-machine interface 22. The controller 20 may then automatically select suitable settings for the processing time and tempering medium temperature (in tempering processes) or other condition (in other processes). However, any of the settings may either be set manually or automatically, as described herein in detail further above. The processing time may also be set depending on a temperature such as a core temperature or surface temperature or any other suitable temperature of the subject material 200. For this, a temperature sensor connected to the controller 20 may be placed within the subject material 200 or otherwise arranged at the subject material 200 (such as at the surface of the subject material 200). Further, the corresponding temperature may also be detected contactless, e.g., by an infrared temperature sensor. The processing time may then be variable and may be deemed to be exceeded when the core temperature (or another temperature, such as a surface temperature, etc.) of the subject material 200 corresponds to the desired target temperature for the subject material 200.

Once the processing time is reached, in step 107 the processing container 12 is emptied by immediately removing the processing medium 19 via the inlet opening 16, which therefore is a combined inlet/drain opening 16. For example, the pump direction may be reversed or the pump 13 may simply be switched off by the controller 20. The processing medium 19 is then drained from the processing container 12 by gravity and/or siphon effect via the inlet opening 16. This immediately (very fast) separates the processing medium 19 from the subject material 200. Therefore, the processing medium may be heated above (in heating/thawing processes) or below (in cooling/freezing processes) the target temperature of the subject material 200 without the risk of overheating or undercooling. This, and the constant processing medium level within the processing container 12, allows for very fast, secure, and even tempering (or otherwise treating) of the subject material 200.

Optionally, the method 100 may include, in a step 106, imparting a circulation movement onto the processing medium 19 when it enters the processing container 12, as described with regard to Fig. 1. Also, the level of the processing medium 19 may be simultaneously and continuously monitored by the level sensor 21 (step 108).

Further, all or some of the relevant process parameters, such as processing time, processing medium temperature, target temperature, type of subject material, etc. may be displayed on a display of the controller 20 or otherwise visualized throughout the processing cycle. Further, alarms may indicate unexpected equipment conditions, such as a low level of processing medium 19.

It should be noted that the steps of the method 100 do not necessarily have to be executed in the described order and that additional method steps may be performed. For example, step 103 may also be carried out prior to step 101 or between step 101 and 102, etc.

It should further be noted that "comprising" or "including" does not exclude other elements or steps, and "one" or "a" or "an" does not exclude a plurality. It should further be noted that features or steps that have been described with reference to any of the above embodiments may also be used in combination with other features or steps of other embodiments described above. Reference signs in the claims are not to be regarded as limitation.

### LIST OF REFERENCE SIGNS

- 10: automatic processing apparatus
- 11: processing medium reservoir
- 12: processing container
- 13: pump, transporting device
- 14: holding device
- 15: overflow channel
- 16: inlet opening, drain opening
- 17: outlet opening, overflow opening
- 18: medium distributor
- 19: processing medium
- 20: controller
- 21: level sensor
- 22: human-machine interface
- 23: insert openings
- 24: heating device, cooling device, combined heating/cooling device
- 25: lid
- 26: temperature sensor

- 100: method for automatically processing a subject material
- 101: bringing a processing medium to predefined conditions
- 102: holding the processing medium at predefined conditions
- 103: arranging subject material
- 104: starting processing cycle
- 105: transporting processing medium
- 106: imparting circulation movement to processing medium
- 107: removing processing medium from processing container
- 108: monitoring level of processing medium
- 200: subject material

## Claims

1. A method (100) for automatically processing a subject material (200), the method (100) comprising:
bringing (101) a processing medium (19) within a processing medium reservoir (11) to predefined conditions;
holding (102) the processing medium (19) within the processing medium reservoir (11) at the predefined conditions;
arranging (103) the subject material (200) to be processed relative to a processing container (12), such that the subject material (200) at least partially is located within the processing container (12);
starting (104) a processing cycle;
continuously transporting (105), via a transporting device (13), the processing medium (19), during a processing time, from the processing medium reservoir (11) into the processing container (12), wherein the processing medium (19) enters the processing container (12) via an inlet opening (16) and exits the processing container (12) by overflowing via an outlet opening (17), such that a fixed processing medium level is present within the processing container (12) during the processing cycle; and
removing (107) the processing medium (19) from the processing container (12) back into the processing medium reservoir (11) via the inlet opening (16) when the processing time is reached.

2. The method (100) of claim 1, further comprising imparting (106), via a medium distributor (18), a circulation movement onto the processing medium (19) when the processing medium (19) enters the processing container (12), thereby providing a constant and homogeneous distribution of conditions of the tempering medium within the processing container (12).

3. The method (100) of any one of the preceding claims, wherein starting (104) of the processing cycle occurs manually by a user via a corresponding input into a human-machine interface (22) of a controller (20) that is in communication with the transporting device (13).

4. The method of claim 1 or 2, wherein starting (104) of the processing cycle occurs automatically by a controller (20) that is in communication with the transporting device (13).

5. The method (100) of any one of the preceding claims, wherein the processing medium (19) overflowing via the outlet opening (17) is directed back to the processing medium reservoir (11) via an overflow channel (15).

6. The method (100) of any one of the preceding claims, wherein the processing medium (19) is selected from the group consisting of:
water;
a silicone oil;
a paint solution;
a galvanic fluid; and
ethanol.

7. The method (100) of any one of the preceding claims, further comprising continuously monitoring (108), via a level sensor (21), a level of the processing medium (19) within the processing medium reservoir (11), thereby ensuring that at any time enough of the processing medium (19) is present within the processing medium reservoir (11).

8. The method (100) of any one of the preceding claims, wherein the processing time is set by a user via a human-machine interface (22) or retrieved from a database based on a type of the subject material (200) to be processed.

9. The method (100) of claim 8, wherein the type of the subject material (200) is entered by a user.

10. The method (100) of any one of claims 1 to 7, wherein the processing time is a variable time that is defined by monitoring (109) a temperature of the subject material (200), wherein the processing time ends when the temperature reaches a target temperature.

11. The method (100) of any one of the preceding claims, wherein the removing (107) of the processing medium (19) is performed by reversing a transport direction of the transporting device (13) and/or by utilizing a siphon effect.

12. The method (100) of any one of the preceding claims, wherein arranging (103) the subject material (200) relative to the processing container (12) comprises arranging (103) the subject material (200) in a holding device (14), arranged at the top of the processing container (12), having insert openings (23) corresponding to the shape of the subject material (200).

13. The method (100) of any one of the preceding claims, wherein the processing of the subject material (200) is a tempering process.

14. The method (100) of claim 13, wherein the tempering process is a thawing process or a freezing process for two component materials.

15. An automatic processing apparatus (10), comprising:
a processing medium reservoir (11);
a processing container (12) having a inlet opening (16) at the bottom and an outlet opening (17) at the top, wherein the outlet opening (17) is fluidly connected with the processing medium reservoir (11) via an overflow channel (15);
a holding device (14) at a top side of the processing container (12);
a transporting device (13) fluidly connected between the inlet opening (16) and the processing medium reservoir (11), wherein the transporting device (13) is configured for transporting a processing medium (19) between the processing medium reservoir (11) and the processing container (12); and
a heating device (24) within the tempering medium reservoir (11);
a controller (20) in communication with the transporting device (13) and the heating device (24);
wherein the controller (20) is configured to control the automatic processing apparatus (10) to execute the steps of the method (100) of any one of the preceding claims.

16. The automatic processing apparatus (10) of claim 15, further comprising an insulated lid (25) on top of the processing medium reservoir (11);
wherein the processing container (12) is placed above the processing medium reservoir (11), thereby providing a height potential between the processing medium reservoir (11) and the processing container (12) for faster removing (107) of the processing medium (19) from the processing container (12) when the processing cycle is finished.
